# EUROPEAN PATENT APPLICATION

(11) **EP 4 611 382 A1**
(43) Date of publication of application: **03.09.2025**
(21) Application number: 25159779.5
(22) Date of filing: 24.02.2025
(51) Int. Cl.: H04N 23/55, B60R 1/26, H04N 23/57, B60R 1/12

(54) **CAMERA APPARATUS, ELECTRONIC REARVIEW MIRROR, VEHICLE, AND DESIGN METHOD FOR VEHICLE**

(30) Priority: 01.03.2024 CN 202410238572
(71) Applicant: Faurecia Clarion Electronics (Fengcheng) Company Limited, Yichun Jiangxi (CN); Faurecia Clarion Electronics (Xiamen) Co., Ltd., Xiamen Fujian (CN)
(72) Inventor: LIAO, Mingyan, No.12 High-tech Av, Fengcheng Hi-tech Ind. Park, Yichun City (CN); XU, Cailing, No.12 High-tech Av, Fengcheng Hi-tech Ind. Park, Yichun City (CN); HONG, Chuyang, No.12 High-tech Av, Fengcheng Hi-tech Ind. Park, Yichun City (CN)
(74) Representative: Pfenning, Meinig & Partner mbB

(57) **Abstract**

The present disclosure discloses a camera apparatus, an electronic rearview mirror, a vehicle and a design method for a vehicle. The camera apparatus of the electronic rearview mirror includes an optical sensor and an optical lens. The optical lens is located at a light incident side of the optical sensor and is configured to transfer light to the optical sensor. An optical axis of the optical lens is not parallel to a first perpendicular line, and the first perpendicular line is a straight line perpendicular to a light incident surface of the optical sensor.

## Description

### TECHNICAL FIELD

The present disclosure relates to the technical field of electronic rearview mirrors for vehicles, and in particular, to a camera apparatus, an electronic rearview mirror, a vehicle and a design method for a vehicle.

### BACKGROUND

An electronic rearview mirror is an indirect vision apparatus for vehicles, which is implemented by using a camera, an electronic control unit and a monitor system. An advantage of the electronic rearview mirror is to eliminate the field of view limitations of a traditional optical rearview mirror caused by factors such as a curvature, a shape, a size and an angle of a mirror. The blind spot of the electronic rearview mirror is relatively narrower, and the entire field of view is wider. In this way, a driver can see more details, thus improving safety during driving, and further, the wind resistance and fuel consumption of the entire vehicle can be reduced during driving.

### SUMMARY

An aspect of the embodiments of the present disclosure provides a camera apparatus applied to an electronic rearview mirror, including: an optical sensor and an optical lens. The optical lens is located at a light incident side of the optical sensor and is configured to transfer light to the optical sensor. Herein, an optical axis of the optical lens is not parallel to a first perpendicular line, and the first perpendicular line is a straight line perpendicular to a light incident surface of the optical sensor.

Further, a range of an included angle α formed by the optical axis of the optical lens and the first perpendicular line is: 0.08° ≤ α ≤ 6.1°.

Further, a value range of a deviation d between the center of the optical axis of the optical lens and the center of the optical sensor is: 0.1 mm ≤ d ≤ 0.5 mm.

Further, the optical lens comprises a convex lens, and a range of a focal length f of the convex lens is 3 mm ≤ f ≤ 25 mm.

Another aspect of the embodiments of the present disclosure provides an electronic rearview mirror including the camera apparatus according to any of the above technical solutions and a display, where the display is electrically connected to the optical sensor and is configured to display a picture captured by the optical sensor.

Yet another aspect of the embodiments of the present disclosure further provides a vehicle includes an electronic rearview mirror according to any of the above technical solutions and a vehicle frame, and a cockpit is formed in the vehicle frame, and the display is connected to the vehicle frame and located in the cockpit.

Further, the vehicle frame includes a vehicle door, and the vehicle further includes an adjusting member, a side of the adjusting member is connected to the vehicle door, and another side of the adjusting member is pivotally connected to the display.

Further, a distance between a first reference plane and the light incident surface of the optical sensor along a height direction of the vehicle gradually increases, and the first reference plane is a surface perpendicular to the optical axis and located at the light incident side of the optical sensor.

Further, a range of an included angle β between the optical axis and a horizontal plane is: 3° ≤ β ≤ 10°.

Yet another aspect of the embodiments of the present disclosure further provides a design method for a vehicle, including: acquiring an optical axis of an optical lens; determining a position of an optical sensor according to the optical axis of the optical lens, to make the optical axis of the optical lens be not parallel to a first perpendicular line, where the first perpendicular line is a straight line perpendicular to a light incident surface of the optical sensor.

### BRIEF DESCRIPTION OF THE DRAWINGS

FIG. 1 shows an imaging schematic diagram of a camera apparatus of a conventional electronic rearview mirror.
FIG. 2 shows an imaging schematic diagram of a camera apparatus of an electronic rearview mirror provided in the embodiments of the present disclosure.
FIG. 3 shows a schematic diagram of an installation structure of an electronic rearview mirror on a vehicle.

Reference signs:
a distant view 1 ; an imaging position A1 of the distant view; an imaging focus A2 of the distant view; a near view 2; an imaging position B1 of the near view; an imaging focus B2 of the near view; an optical lens 3; an optical axis 31; an optical sensor 4; a first perpendicular line L1; a first reference plane L2; a horizontal plane L3; a vehicle 5; an electronic rearview mirror 6; a center O₁ of the optical axis of the optical lens; a center O₂ of the optical sensor.

### DETAILED DESCRIPTION

The embodiments of the present disclosure will be described below in detail with reference to the accompanying drawings.

In the description of the present disclosure, it should be understood that, orientations or positional relationships indicated by the terms such as "center", "up", "down", "front", "back", "left", "right", "vertical", "horizontal", "top", "bottom", "inner", "outer", or the like are based on orientations or positional relationships shown in the accompanying drawings, which are merely to facilitate and simplify the description of the present disclosure, and are not to indicate or imply that apparatus or elements referred to must have a particular orientation, or must be constructed or operated in a particular orientation. Therefore, these terms should not be understood as limitations on the present disclosure.

In the description of the present disclosure, it should be noted that unless otherwise specified and limited, the terms "install", "connect", and "couple" and variations thereof should be broadly understood. For example, the meaning of the above terms may be a fixed connection, a detachable connection, or an integral connection; may also be a mechanical connection or an electrical connection; or may be a direct connection, an indirect connection through an intermediate medium, or an internal connection between two elements. Specific meanings of the above terms in the present disclosure may be understood by a person of ordinary skill in the art according to specific situations.

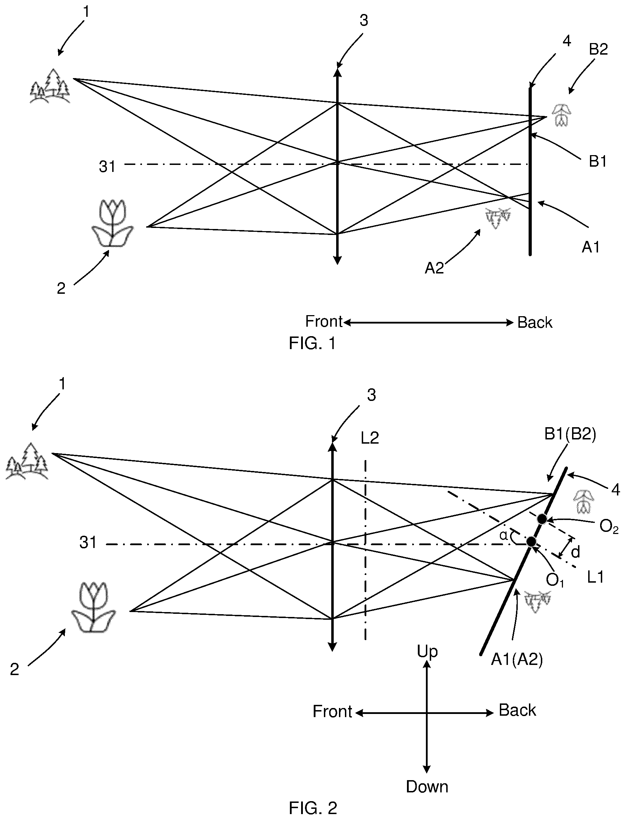

An aspect of the embodiments of the present disclosure provides a camera apparatus applied to an electronic rearview mirror. FIG. 1 shows an imaging schematic diagram of a camera apparatus of a conventional electronic rearview mirror. Referring to FIG. 1, a distant view 1 (i.e., objects from 2 meters to infinity in front of an optical lens 3, such as mountains, forests, or buildings, etc.) is refracted by the optical lens 3, and an imaging position A1 of the distant view is located behind an imaging focus A2 of the distant view. A near view 2 (i.e., objects within 2 meters in front of the optical lens 3, such as a green belt or a neighboring car, etc.) is refracted by the optical lens 3, and an imaging position B1 of the near view is located before an imaging focus B2 of the near view.

Therefore, neither an image of the distant view 1 nor an image of the near view 2 may be focused on an imaging surface of the optical sensor 4 at the same time, and thus, the imaging clarity is poor, which is not conducive to the driver's observation and poses a safety hazard during the driving of the vehicle.

Based on this, in order to solve the problem of poor imaging clarity of the conventional electronic rearview mirror, the present disclosure provides a camera apparatus, an electronic rearview mirror, a vehicle and a design method for a vehicle. The structures and principles of the present disclosure will be described below in detail with reference to the accompanying drawings.

FIG. 2 shows an imaging schematic diagram of a camera apparatus of an electronic rearview mirror provided in the embodiments of the present disclosure. Referring to FIG. 2, the camera apparatus includes an optical lens 3 and an optical sensor 4, the optical lens 3 is located at a light incident side of the optical sensor 4, and is configured to transfer light to the optical sensor 4. Herein, an optical axis 31 of the optical lens 3 is not parallel to a first perpendicular line L1, and the first perpendicular line L1 is a straight line perpendicular to a light incident surface of the optical sensor 4.

That is to say, in a conventional structure, the optical lens 3 and the optical sensor 4 are arranged in parallel, and the optical axis 31 of the optical lens 3 and the first perpendicular line L1 of the optical sensor 4 are parallel and coincident. However, in the solution of the present disclosure, the optical sensor 4 is deflected relative to the optical lens 3, so that the optical axis 31 of the optical lens 3 and the first perpendicular line L1 of the optical sensor 4 are no longer parallel.

In this way, it can be promoted that imaging focuses of the distant view 1 and the near view 2 is located at an imaging surface of the tilted optical sensor 4, which is helpful for the imaging position A1 of the distant view to be on the imaging focus A2 of the distant view, and the imaging position B1 of the near view to be on the imaging focus B2 of the near view, thereby effectively improving the imaging clarity of the distant view 1 and the near view 2.

It should be noted that the above-mentioned "optical lens" may be an optical lens containing a single lens, or an optical lens composed of multiple lenses.

Continuing to refer to FIG. 2, in some embodiments, a value range of a deviation d between a center O₁ of the optical axis of the optical lens and a center O₂ of the optical sensor is 0.1 mm ≤ d ≤ 0.5 mm.

In this way, since the range of the deviation between the center O₁ of the optical axis of the optical lens and the center O₂ of the optical sensor is 0.1 mm ~ 0.5 mm, the imaging position A1 of the distant view is closer to the center O₁ of the optical axis of the optical lens. The closer to the center O₁ of the optical axis of the optical lens, the smaller the distortion and the greater the imaging magnification. The imaging position B1 of the near view is farther from the center O₁ of the optical axis of the optical lens. The greater the deviation from the center O₁ of the optical axis of the optical lens, the greater the distortion and the smaller the imaging magnification.

In this way, after the magnification rate of the distant view 1 is magnified, an imaging proportion can be increased, so that imaging for distant view can be magnified, which is conducive to a driver to better observe the distant view 1 and make early judgment.

In order to promote the imaging focuses of the distant view 1 and the near view 2 to be located at the imaging surface of the tilted optical sensor 4, specific corresponding relationships between optical lenses 3 with different focal lengths and deflection angles of the optical sensor 4 through experiments are obtained through experiments in the present disclosure, as shown in Table 1. It can be seen from Table 1 that as a focal length of the optical lens 3 continues to increase, a deflection angle of the optical sensor 4 should gradually increase accordingly.

In some embodiments, a range of an included angle α formed by the optical axis 31 of the optical lens 3 and the first perpendicular line L1 is 0.08° ≤ α ≤ 6.1°, which is conducive to make the imaging position A1 of the distant view at the imaging focus A2 of the distant view, and the imaging position B1 of the near view at the imaging focus B2 of the near view.

In some embodiments, the optical lens 3 includes a convex lens, and a range of a focal length f of the convex lens is 3 mm ≤ f ≤ 25 mm. It can be seen from Table 1 that a value range of the included angle α increases with the increase of the focal length. For each focal length, a specific value of the included angle α may be determined according to a size of the optical sensor in a perpendicular direction.

**Table 1 A correspondence table of a quantitative relationship between a focal length and an included angle**

| Focal length f/mm | Included angle α/° |
|---|---|
| 3 | 0.05579-0.087142 |
| 4 | 0.099232-0.154999 |
| 5 | 0.155129-0.242308 |
| 6 | 0.2235-0.3491 |
| 7 | 0.304362-0.475402 |
| 8 | 0.397735-0.621242 |
| 9 | 0.503637-0.786643 |
| 10 | 0.622084-0.97163 |
| 11 | 0.753094-1.176222 |
| 12 | 0.896682-1.400438 |
| 13 | 1.052864-1.644289 |
| 14 | 1.221652-1.907784 |
| 15 | 1.403059-2.190925 |
| 16 | 1.597096-2.493708 |
| 17 | 1.80377-2.81612 |
| 18 | 2.023088-3.158141 |
| 19 | 2.255052-3.51974 |
| 20 | 2.499664-3.900875 |
| 21 | 2.756921-4.301492 |
| 22 | 3.026816-4.721523 |
| 23 | 3.309339-5.160886 |
| 24 | 3.604475-5.619481 |
| 25 | 3.912204-6.097192 |

Another aspect of the embodiments of the present disclosure provides an electronic rearview mirror, including the camera apparatus according to any of above technical solutions and a display, where the display is electrically connected to the optical sensor 4 and is configured to display a picture captured by the optical sensor 4.

In this way, a driver may perceive specific road conditions around a vehicle 5 through the picture shown on the display.

Another aspect of the embodiments of the present disclosure further provides a vehicle 5, including an electronic rearview mirror according to any of above technical solutions and a vehicle frame, and a cockpit is formed in the vehicle frame, and the display is connected to the vehicle frame and located in the cockpit.

Thus, compared with a manner of setting a display (e.g., a mirror part of a traditional rearview mirror) outside the cockpit, setting the display inside the cockpit can effectively prevent the display from being covered by rain and snow, thereby facilitating the driver's observation activities.

In some embodiments, the vehicle frame includes a vehicle door, and the vehicle further includes an adjusting member, a side of the adjusting member is connected to the vehicle door, and another side of the adjusting member is pivotally connected to the display.

In this way, the driver can use the adjusting member to freely adjust a viewing angle of the display according to own driving habits of the driver.

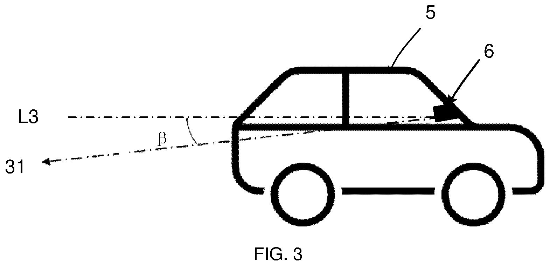

FIG. 3 shows a schematic diagram of an installation structure of an electronic rearview mirror on a vehicle. Referring to and in combination with FIG. 2 and FIG. 3, in some embodiments, a distance between a first reference plane L2 and a light incident surface of the optical sensor 4 along a height direction of the vehicle 5 gradually increases, and the first reference plane L2 is a surface perpendicular to the optical axis 31 and located at the light incident side of the optical sensor 4.

That is to say, the optical sensor 4 is tilted upward and backward relative to the optical lens 3, so that images of the distant view 1 and the near view 2 can be located at the tilted optical sensor 4 at the same time.

Continuing to refer to FIG. 3, in some embodiments, a range of an included angle β between the optical axis 31 and a horizontal plane L3 is: 3° ≤ β ≤ 10°, so that the camera apparatus in the electronic rearview mirror 6 can better cover a regulatory area.

It should be noted that the included angle β between the optical axis 31 and the horizontal plane L3 mainly affects a proportion of sky and ground, and a specific angle value may be determined according to the size of the optical sensor 4.

Another aspect of the embodiments of the present disclosure further provides a design method for a vehicle, where the design method for the vehicle includes S1 - S2.

In S1, an optical axis 31 of an optical lens 3 is acquired.

It should be noted that the optical axis 31 of the optical lens 3 refers to a main optical axis 31 of the optical lens 3, i.e., a central axis of the optical lens 3. In an optical system, the optical axis 31 of the optical lens 3 is usually configured to determine a propagation direction of light and a position of the optical lens 3, and refraction and imaging of light on the optical lens 3 are both performed around the optical axis 31.

In S2, a position of the optical sensor 4 is determined according to the optical axis 31 of the optical lens 3, to make the optical axis 31 of the optical lens 3 be not parallel to a first perpendicular line L1, and the first perpendicular line L1 is a straight line perpendicular to a light incident surface of the optical sensor 4. In this way, it can be promoted that both the imaging focuses A2 and B2 of the distant view 1 and the near view 2 to be located at the imaging surface of the tilted optical sensor 4. The imaging position A1 of the distant view is on the imaging focus A2 of the distant view, and the imaging position B1 of the near view is on the imaging focus B2 of the near view, thereby effectively improving the imaging clarity of the distant view 1 and the near view 2, which is beneficial for the driver to observe the road conditions around the vehicle.

In summary, in the present disclosure, by deflecting the optical sensor 4 relative to the optical lens 3, so that the optical axis 31 of the optical lens 3 and the first perpendicular line L1 of the optical sensor 4 are no longer parallel. In this way, on the one hand, it can be promoted that the imaging focuses of the distant view 1 and the near view 2 be located at the imaging surface of the tilted optical sensor 4, which is helpful for the imaging position A1 of the distant view to coincide with the imaging focus A2 of the distant view, and the imaging position B1 of the near view to coincide with the imaging focus B2 of the near view, thereby effectively improving the imaging clarity of the distant view 1 and the near view 2. On the other hand, since a range of the deviation between the center O₁ of the optical axis of the optical lens and the center O₂ of the optical sensor is 0.1 mm ~ 0.5 mm, the imaging position A1 of the distant view is closer to the center O₁ of the optical axis of the optical lens. The closer to the center O₁ of the optical axis of the optical lens, the smaller the distortion and thus, the greater the imaging magnification. The imaging position B1 of the near view is farther from the center O₁ of the optical axis of the optical lens. The greater the deviation from the center O₁ of optical axis of the optical lens, the greater the distortion and thus the smaller the imaging magnification. In this way, after the magnification rate of the distant view is magnified, the imaging proportion can be increased, so that imaging for distant view can be magnified, which is conducive to a driver to better observe the distant view and make early judgment.

In the description of the specification, specific features, structures, materials or characteristics may be combined in any suitable manner in any one or more embodiments or examples.

The foregoing descriptions are merely specific implementations of the present disclosure, but the protection scope of the present disclosure is not limited thereto, and changes or replacements that any of those skilled in the art could readily conceive of within the technical scope disclosed by the present disclosure shall be within the protection scope of the present disclosure. Therefore, the protection scope of the present disclosure shall be subject to the protection scope of the claims.

## Claims

1. A camera apparatus, applied to an electronic rearview mirror (6), **characterized in that** the camera apparatus comprises:
an optical sensor (4); and
an optical lens (3), wherein the optical lens (3) is located at a light incident side of the optical sensor (4), and the optical lens (3) is configured to transfer light to the optical sensor (4);
wherein an optical axis (31) of the optical lens (3) is not parallel to a first perpendicular line (L1), and the first perpendicular line (L1) is a straight line perpendicular to a light incident surface of the optical sensor (4).

2. The camera apparatus according to claim 1, wherein a value range of an included angle α formed by the optical axis (31) of the optical lens (3) and the first perpendicular line (L1) of the optical sensor (4) is: 0.08° ≤ α ≤ 6.1°.

3. The camera apparatus according to claim 1, wherein a value range of a deviation d between a center (O₁) of the optical axis (31) of the optical lens (3) and a center (O₂) of the optical sensor (4) is: 0.1 mm ≤ d ≤ 0.5 mm.

4. The camera apparatus according to claim 1, wherein the optical lens (3) comprises: a convex lens, and a range of a focal length f of the convex lens is 3 mm ≤ f ≤ 25 mm.

5. An electronic rearview mirror (6), **characterized by** comprising: a display and the camera apparatus according to any of claims 1 to 4, wherein the display is electrically connected to the optical sensor (4) of the camera apparatus, and the display is configured to display a picture captured by the optical sensor (4).

6. A vehicle (5), **characterized by** comprising:
a vehicle frame, wherein a cockpit is formed in the vehicle frame; and
the electronic rearview mirror (6) according to claim 5, wherein the display of the electronic rearview mirror (6) is connected to the vehicle frame and is located in the cockpit.

7. The vehicle (5) according to claim 6, wherein the vehicle (5) frame comprises a vehicle door; the vehicle (5) further comprises: an adjusting member, wherein a side of the adjusting member is connected to the vehicle door, and another side of the adjusting member is pivotally connected to the display.

8. The vehicle (5) according to claim 6 or 7, wherein a distance between a first reference plane (L2) and the light incident surface of the optical sensor (4) along a height direction of the vehicle (5) gradually increases, and the first reference plane (L2) is a surface perpendicular to the optical axis (31) and located at the light incident side of the optical sensor (4).

9. The vehicle (5) according to claim 8, wherein a range of an included angle β between the optical axis (31) and a horizontal plane (L3) is 3° ≤ β ≤ 10°.

10. A design method for a vehicle (5), **characterized in that** the vehicle (5) comprises: an electronic rearview mirror (6) according to claim 5, and the design method for the vehicle (5) comprises:
acquiring an optical axis (31) of an optical lens (3);
determining a position of an optical sensor (4) according to the optical axis (31) of the optical lens (3), to make the optical axis (31) of the optical lens (3) be not parallel to a first perpendicular line (L1), wherein the first perpendicular line (L1) is a straight line perpendicular to a light incident surface of the optical sensor (4).
